(19) **Europäisches Patentamt European Patent Office Office européen des brevets**

(11) **EP 3 896 613 B1**

(12) **EUROPEAN PATENT SPECIFICATION**

(45) Date of publication and mention of the grant of the patent:
**05.06.2024 Bulletin 2024/23**

(21) Application number: **20169267.0**

(22) Date of filing: **14.04.2020**

(51) International Patent Classification (IPC):
**G06V 10/774** *(2022.01)*

(52) Cooperative Patent Classification (CPC):
**G06N 20/00; G06V 10/774;** G06N 3/008;
G06N 3/04; G06N 3/08

(54) **DEVICE AND METHOD FOR TRAINING A CLASSIFIER AND ASSESSING THE ROBUSTNESS OF A CLASSIFIER**

VORRICHTUNG UND VERFAHREN ZUM TRAINIEREN EINES KLASSIFIKATORS UND BEURTEILEN DER ROBUSTHEIT EINES KLASSIFIKATORS

DISPOSITIF ET PROCÉDÉ POUR L'APPRENTISSAGE D'UN CLASSIFICATEUR ET ÉVALUER LA ROBUSTESSE D'UN CLASSIFICATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **Robert Bosch GmbH 70442 Stuttgart (DE)**

(72) Inventors:
• **Finnie, Nicole Ying**
  **71034 Boeblingen (DE)**
• **Metzen, Jan Hendrik**
  **71034 Boeblingen (DE)**
• **Hutmacher, Robin**
  **71272 Renningen (DE)**

(56) References cited:
**EP-A1- 3 576 021**

• **ALEXANDRU CONSTANTIN SERBAN ET AL: "Adversarial Examples - A Complete Characterisation of the Phenomenon", ARXIV.ORG, CORNELL UNIVERSITY LIBRARY, 201 OLIN LIBRARY CORNELL UNIVERSITY ITHACA, NY 14853, 2 October 2018 (2018-10-02), XP080929044,**
• **XIAO YANG ET AL: "Design and Interpretation of Universal Adversarial Patches in Face Detection", ARXIV.ORG, CORNELL UNIVERSITY LIBRARY, 201 OLIN LIBRARY CORNELL UNIVERSITY ITHACA, NY 14853, 30 November 2019 (2019-11-30), XP081549086,**
• **BAI LI ET AL: "Second-Order Adversarial Attack and Certifiable Robustness", ARXIV.ORG, CORNELL UNIVERSITY LIBRARY, 201 OLIN LIBRARY CORNELL UNIVERSITY ITHACA, NY 14853, 10 September 2018 (2018-09-10), XP081189094,**

**Description**

The invention concerns a method for training a classifier, a method for determining a robustness value of a classifier, a method for operating an actuator, a computer program, a machine-readable storage medium, a classifier, a control system, and a training system.

Prior art

EP3576021 discloses a method to generate automated learning systems with guaranteed robustness against adversarial modifications of the input.

XP080929044 provides complete characterisation of the phenomenon of adversarial examples - inputs intentionally crafted to fool machine learning models including the methods to generate them.

XP081549086 discloses the generation of universal adversarial patches for faces as small visual elements whose addition to a face image reliably destroys the performance of face detectors. XP081189094 discloses the use of adversarial examples to improve the robustness of classifiers.

DE 10 2018 200 724 A1 discloses a method for generating universal adversarial perturbations.

Advantages of the invention

Classifiers, especially those based on machine learning models, are susceptible to adversarial examples, i.e., input signals that have been altered to cause a misclassification by a respective classifier. Hardening classifiers to become robust against adversarial examples is hence an important task for many applications.

Consider, for example, an autonomous vehicle, which uses a classifier to detect pedestrians in the surroundings of the vehicle in order to plan a trajectory to not collide with any of the detected pedestrians. It can be imaged that an attacker could create an adversarial example to fool the classifier into not detecting certain pedestrians and have the vehicle plan a trajectory which causes a collision with the misdetected pedestrians.

A classifier can be made robust to adversarial examples by training it with an adversarial training method, e.g., PGD-based adversarial training or training with universal adversarial examples. Adversarial training methods may require initial perturbations for creating adversarial examples during the process of training. Obtaining a suitable set of initial perturbations is paramount for adversarial training methods, which adapt the initial perturbations to the data used for training, e.g., for obtaining increasingly strong perturbations. If the initial perturbations are not suitable, it may take a long time to adapt the initial perturbations to the data.

The method with features of independent claim 1 is advantageously able to provide diverse perturbations as initializations for adversarial training. Due to the way the perturbations are provided, they require only a small time to be adjusted to the training data, which in turn speeds up the training. This leads to a more robust classifier as it is able to be trained with more data during a given timespan.

Disclosure of the invention

In a first aspect, the invention is concerned with a computer-implemented method for training a classifier (60), wherein the classifier (60) is configured to classify input signals of digital image data and/or audio data and training the classifier (60) is based on a perturbed input signal obtained by applying a perturbation provided from a plurality (Ç) of perturbations to an input signal provided from a training dataset, wherein the method comprises the following steps:

- Providing a plurality of initial perturbations;
- Adapting a perturbation from the plurality of initial perturbations to an input signal, wherein the input signal is randomly drawn from the training dataset and the perturbation is adapted to the input signal such that applying the perturbation to the input signal yields a second input signal, which is classified differently than the first input signal;
- Providing a subset of the plurality of initial perturbations as plurality (Ç) of perturbations;
- Training the classifier (60) based on the plurality (Ç) of perturbations.

The term "classifier" may be understood to mean a device that accepts an input signal and provides an output signal characterizing a classification of the input signal. For this, the classifier may obtain the output signal by feeding the input signal to a machine learning model, especially a neural network. In addition, the classifier may adapt the input signal before feeding it into the classifier, e.g., extracting features from the input signal. Additionally, the classifier may also post-process the output signal of the machine learning model.

The classifier may accept input signals of various modalities, especially images such as, e.g., video images, RADAR images, LIDAR images and/or ultrasonic images as well as thermal camera images. For images, the classifier may preferably comprise a convolutional neural network.

Alternatively, the classifier may accept audio data as input, e.g., in the form of a quantized signal or a feature representation of an audio signal such as MFCC. For audio data, the classifier may preferably comprise a transformer network or a recurrent neural network, e.g., an LSTM.

Alternatively, an input signal may also comprise data which is a combination of multiple sensor signals and/or sensor signals of different modalities. When providing both image and audio data in the input signal, the classifier may preferably comprise different kinds of neural networks for processing the respective parts of the input signal, e.g., a combination of one or multiple convolutional neural networks and one or multiple transformer networks.

The classification characterized by the output signal may assign one or multiple class labels to the input signal. Alternatively or additionally, it can be envisioned that the output signal characterizes a classification in the form of an object detection, especially when using image data as input signals. Alternatively or additionally, it can be envisioned that the output signal characterizes a semantic segmentation of the input signal.

For audio signals, a classification may assign class labels to an entire sequence of audio data. Alternatively or additionally, the classification may also be of the form of a detection of the beginning and ending of certain audio events (e.g., sirens in a microphone recording) of an audio sequence.

Applying a perturbation to an input signal can be understood as overlaying the input signal with the perturbation. For example, when using images as input signals the perturbation may be given by a small image patch that may be superimposed onto a given input image in order to form a perturbed image. In this case, the position where to place the patch in the input image may be chosen at random. Alternatively or additionally, the patch may also be transformed by an affine transformation before applying it to the input image. For audio data, the perturbations may be superimposed onto a random part of an audio sequence in order to form a perturbed datum.

It can be further envisioned, that the perturbations and the input signals have the same dimensionality and that applying the perturbation to the input signal may be achieved by adding together the perturbation and the input signal. For example, when using image data, a perturbation may have the same size as the images used for training the classifier. In this case, the pixel values of the perturbation and the image may be added to form an adversarial example. Additionally, the perturbation may be scaled by a scalar value before being applied to the input image. A similar approach may be used mutatis mutandis for applying a respective perturbation to an audio signal.

If the classifier provides an output signal for an input signal, the output signal may comprise a plurality of logit values, wherein each of these logit values corresponds to a class. Also, the input signal may be assigned a desired class and the output signal may be considered as characterizing a correct classification, if the logit value corresponding to the desired class is the largest among the plurality of logit values.

For assessing whether a second perturbation is stronger, i.e., more apt to be used for fooling the classifier than a first perturbation, the second perturbation may be applied to an input signal to obtain a corresponding second perturbed input signal and the first perturbation may be applied to the same input signal to obtain a first perturbed input signal. The classifier may then obtain a second output signal using the second perturbed input signal as input signal and a first output signal using the first perturbed input signal as input signal. The second output signal hence corresponds to the second perturbation while the first output signal corresponds to the first perturbation.

The second perturbation may then be considered stronger than the first perturbation if the logit value of the desired class is smaller in the second output signal than in the first output signal. Similarly, the second perturbation may also be considered to be stronger than the first perturbation if the largest logit value of the non-desired classes in the second output signal is bigger than the largest logit value of the non-desired classes in the first output signal. Both options may be understood as the classifier being more confident in a wrong prediction using the second perturbation rather than the first perturbation.

Alternatively or additionally, an output signal may comprise a plurality of probability values, wherein each of these probability values corresponds to a class, and the first and second output signal may be computed as before. In this case, the second perturbation may be considered stronger than the first perturbation if the probability value of the desired class is smaller in the second output signal than in the first output signal.

In another aspect, it can be further envisioned that at least one perturbation from the plurality of initial perturbations is provided by randomly drawing a noise signal and providing the noise signal as perturbation.

The process of training the classifier benefits from randomly initializing a plurality of perturbations as they are by highly diverse by construction. The advantage of this is that diverse perturbations lead to the classifier to become robust against a wide range of perturbations, in turn making it significantly harder to fool the classifier after training.

In another aspect, it can be further envisioned that at least one perturbation from the plurality of initial perturbations is provided by randomly sampling an input signal from the training dataset or a second dataset, adapting a plurality of values comprised in the input signal, and providing the adapted input signal as perturbation.

In order to obtain an initial set of strong perturbations, the classifier may be pretrained without a defense method against adversarial examples. Afterwards, one or multiple second adversarial examples can be obtained from the classifier, e.g., by adapting the images in the training dataset with known adversarial attack methods. The perturbations necessary to cause the one or multiple second adversarial examples may then be used as initial set of perturbations for the training.

The advantage of this approach is, that the perturbations used for initializing the training can already be used to form adversarial examples. The step of forming a second perturbation is hence greatly speed up as, e.g., gradient based approaches such as the iterative fast gradient sign method (I-FGSM) or projected gradient descent (PGD) require considerably fewer steps for obtaining the second perturbation from the first perturbation. In turn, this leads to a faster training, which subsequently leads to the classifier being able to extract information from more training samples during training. This has the effect that the classifier's performance and robustness is improved even further.

When using a second dataset, the type of data can preferably be identical to the type of data of the training dataset.

In another aspect, it can be further envisioned that in the step of adapting the perturbation the perturbation is applied to a region of the input signal for obtaining a perturbed input signal.

The advantage of this approach is that the classifier also becomes robust to perturbations, which do not target the entire input signal. For example, it can be imagined that stickers on objects are used to fool a classifier receiving image data input from a camera. In order to become robust to these perturbations, the classifier can be trained with perturbations only being applied to smaller regions of the image. Before application, the perturbations may also be transformed, e.g., through affine transformations such as rotation or scaling.

For audio data, a certain time span of the audio signal used as input signal may be perturbed in order to obtain a perturbed input signal.

In another aspect, it can be envisioned that the step of training the classifier comprises the further steps of:

> a. Selecting a first perturbation from the plurality of perturbations and selecting an input signal and a corresponding desired output signal from the training dataset;
> b. Obtaining a second perturbation, which is stronger than the first perturbation, by adapting the first perturbation based on the input signal, the corresponding desired output signal and the classifier;
> c. Obtaining a first adversarial example by applying the second perturbation to the input signal;
> d. Adapting the classifier by training the classifier based on the first adversarial example and the corresponding desired output signal to harden the classifier against the second perturbation;
> e. Replacing the first perturbation in the plurality of perturbations by a linear combination of the first perturbation and the second perturbation;
> f. Repeating steps a. to e.

Training the classifier with the proposed method may be understood as a form of meta-training, wherein the set of perturbations as well as the classifier are trained. The classifier is trained with the goal of achieving as high of a classification accuracy (also known as performance) as possible, while the method also seeks to find as strong of a set of perturbations as possible.

Training the classifier with increasingly strong perturbations hence allows for hardening the classifier against strong adversarial attacks and makes it extremely robust.

The training can be carried out in an iterative fashion. In each training step, the method may select a batch of training data, comprising one or multiple tuples of input signals and desired output signals. For each input signal, a first perturbation may then be drawn randomly with replacement from the set of perturbations. Each first perturbation drawn this way may then be adapted to its corresponding input signal in order to determine a stronger second perturbation.

The classifier may then be trained by providing it with the adversarial examples obtained from applying the obtained second perturbations to their respective input signals and minimizing a classification loss characterizing the difference between the obtained output signals to the desired output signals for the respective input signals.

In addition, each first perturbation may be replaced in the set of perturbations by a weighted sum of the first perturbation itself and the second perturbation. This advantageously also trains the perturbations to become stronger in general. The benefit for the training method is that the classifier has to learn to defend itself against increasingly stronger perturbations. In turn, this helps the classifier to become robust against adversarial attacks in general.

In another aspect, the invention is concerned with a computer-implemented method for determining a robustness value for a classifier (60), wherein the classifier (60) is configured to classify input signals of digital image data and/or audio data, the method comprising the steps of:

> g. Providing a plurality of initial perturbations;
> h. Selecting a first perturbation form the plurality of perturbations and selecting an input signal and a corresponding desired output signal from a test dataset;
> i. Obtaining a second perturbation, which is stronger than the first perturbation, by adapting the first perturbation based on the input signal, the corresponding desired output signal and the classifier (60);
> j. Replacing the first perturbation in the plurality of perturbations by a linear combination of the first perturbation and the second perturbation;
> k. Repeating steps h. to j. for a predefined number of iterations;
> l. Determining a strongest perturbation from the plurality of perturbations with respect to a test dataset after having completed the predefined number of iterations;
> m. Determining a fraction of input signals in the test dataset for which the strongest perturbation is able to cause a misclassification by the classifier (60) and providing the determined fraction as the robustness value.

The advantage of the proposed method is that the classifier is evaluated against the hardest perturbation after adapting the perturbations to fool the classifier. In turn this allows for a very accurate estimation of the vulnerability of the classifier against perturbations applied to potential input signals of the classifier. For this, the test dataset is preferably of the same data type as the training dataset used for training the classifier.

The robustness value may be used as criterion when deciding whether to use a classifier in a (potentially safety-critical) device. For example, it can be imagined that a classifier shall be used in an at least partially autonomous vehicle for detecting pedestrians in order to plan a collision-free route. It can be imagined that the classifier has to fulfill a robustness criterion, e.g., the classifier has to be robust to small changes (i.e. perturbations) in the input signals. This robustness criterion can be handily checked by determining whether the obtained robustness value surpasses a predefined robustness threshold. If this is the case, the classifier may be used in the vehicle. Otherwise, it can for example be trained with additional training data and/or different perturbations.

Embodiments of the invention will be discussed with reference to the following figures in more detail. The figures show:

Figure 1    a control system comprising a classifier controlling an actuator in its environment;

Figure 2    the control system controlling an at least partially autonomous robot;

Figure 3    the control system controlling an automated personal assistant;

Figure 4    the control system controlling an access control system;

Figure 5    the control system controlling a surveillance system;

Figure 6    a flow chart of a method for training the classifier;

Figure 7    a training system for training the classifier;

Description of the embodiments

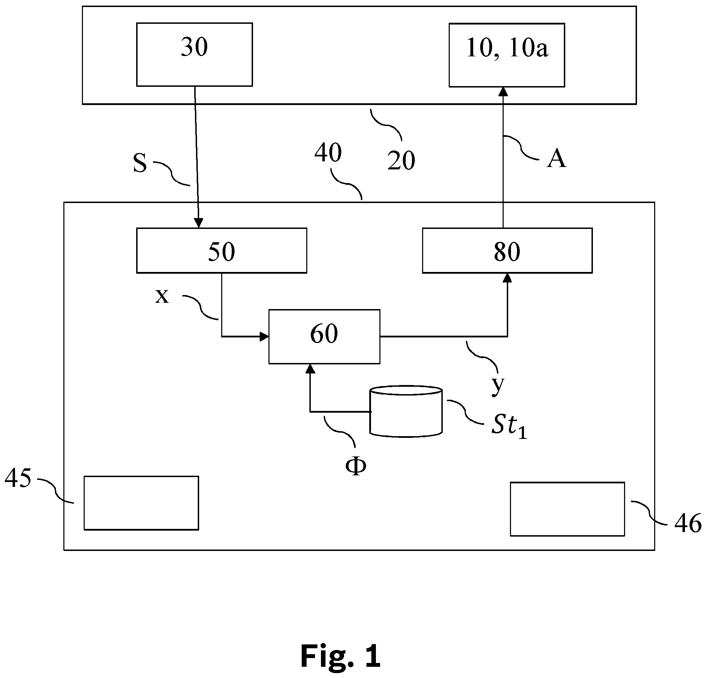

Shown in figure 1 is an embodiment of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of actuator control commands (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal (x).

The input signal (x) is then passed on to a classifier (60).

The classifier (60) is parametrized by a set ($\Phi$) of parameters, which are stored in and provided by a parameter storage ($St_1$).

The classifier (60) determines an output signal (y) from the input signals (x). The output signal (y) comprises information that assigns one or more labels to the input signal (x). The output signal (y) is transmitted to an optional conversion unit (80), which converts the output signal (y) into the control commands (A). The actuator control commands (A) are then transmitted to the actuator (10) for controlling the actuator (10) accordingly. Alternatively, the output signal (y) may directly be taken as actuator control commands (A).

The actuator (10) receives actuator control commands (A), is controlled accordingly and carries out an action corresponding to the actuator control commands (A). The actuator (10) may comprise a control logic which transforms an actuator control command (A) into a further control command, which is then used to control actuator (10).

In further embodiments, the control system (40) may comprise a sensor (30). In even further embodiments, the control system (40) alternatively or additionally may comprise the actuator (10).

In one embodiment, the classifier (60) may be designed to identify lanes on a road ahead, e.g., by classifying a surface of the road and markings on the road, and identifying lanes as patches of road surface between the markings. Based on an output of a navigation system, a suitable lane for pursuing a chosen path can then be selected, and depending on a present lane and said target lane, it may then be decided whether a vehicle (100) is to switch lanes or stay in the present lane. The actuator control command (A) may then be computed by, e.g., retrieving a predefined motion pattern from a database corresponding to the identified action.

Additionally or alternatively, the classifier (60) may also detect road signs and traffic lights in the environment (20). Upon identifying road signs or traffic lights, depending on an identified type of road sign or an identified state of said traffic lights, corresponding constraints on possible motion patterns of the vehicle (100) may then be retrieved from, e.g., a database, a planned trajectory of the vehicle (100) may be computed according to the constraints, and the actuator control command (A) may be computed to steer the vehicle (100) such as to execute the planned trajectory.

Additionally or alternatively, the classifier may also detect pedestrians and/or vehicles in the environment (20). Upon identifying pedestrians and/or vehicles, a projected future behavior of the pedestrians and/or vehicles may be estimated, and based on the estimated future behavior, a trajectory may then be selected such as to avoid collision with the identified pedestrians and/or vehicles, and the actuator control command (A) may be computed to steer the vehicle (100) such as to execute the trajectory.

In further embodiments, it can be envisioned that the control system (40) controls a display (10a) instead of or in addition to the actuator (10).

Furthermore, the control system (40) may comprise a processor (45) (or a plurality of processors) and at least one machine-readable storage medium (46) on which instructions are stored, which, if carried out, cause the control system (40) to carry out a method according an aspect of the invention.

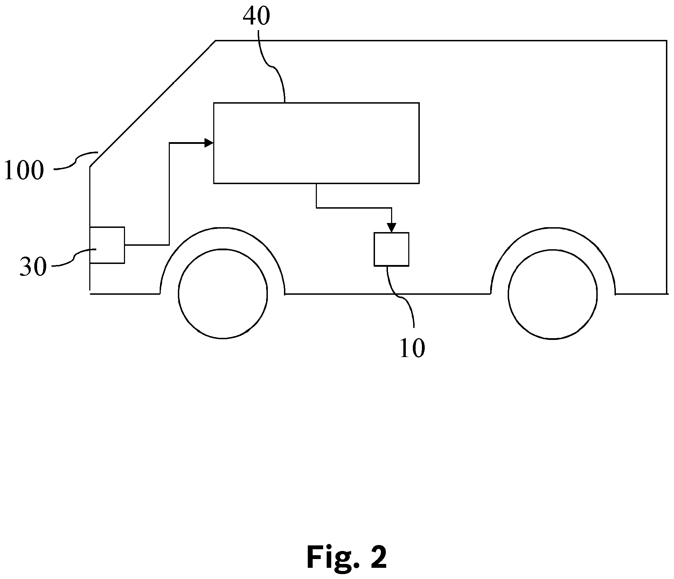

Figure 2 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in the vehicle (100). Alternatively or additionally, the sensor (30) may comprise an information system for determining a state of the actuator system. One example for such an information system is a weather information system which determines a present or future state of the weather in the environment (20).

For example, using the input signal (x), the classifier (60) may, for example, detect objects in the vicinity of the at least partially autonomous robot. The output signal (y) may comprise an information which characterizes where objects are located in the vicinity of the at least partially autonomous robot. The actuator control command (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The actuator control commands (A) may be determined such that the actuator (or actuators) (10) is/are controlled such that vehicle (100) avoids collisions with the detected objects. Detected objects may also be classified according to what the classifier (60) deems them most likely to be, e.g., pedestrians or trees, and the actuator control commands (A) may be determined depending on the classification.

The at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. The actuator command control (A) may be determined such that propulsion unit and/or steering and/or brake of the mobile robot are controlled such that the mobile robot may avoid collisions with the identified objects.

The at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an actuator control command (A) may be determined to cause the actuator (10) to spray the plants with a suitable quantity of suitable liquids and/or cut the plants.

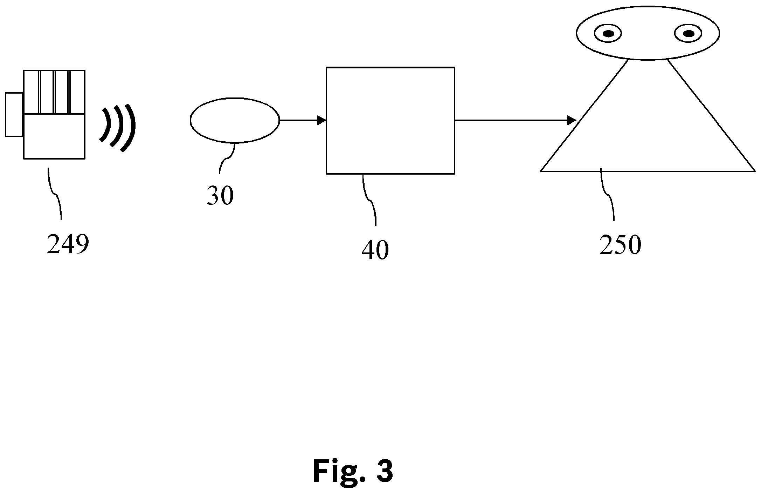

Shown in figure 3 is a non claimed implementation in which the control system (40) is used for controlling an automated personal assistant (250). The sensor (30) may be an optic sensor, e.g. for receiving video images of a gestures of a user (249). Alternatively, the sensor (30) may also be an audio sensor, e.g., for receiving a voice command of the user (249).

The control system (40) then determines actuator control commands (A) for controlling the automated personal assistant (250). The actuator control commands (A) are determined in accordance with the sensor signal (S) of the sensor (30). The sensor signal (S) is transmitted to the control system (40). For example, the classifier (60) may be configured to, e.g., carry out a gesture recognition algorithm to identify a gesture made by the user (249). The control system (40) may then determine an actuator control command (A) for transmission to the automated personal assistant (250). It then transmits the actuator control command (A) to the automated personal assistant (250).

For example, the actuator control command (A) may be determined in accordance with the identified user gesture recognized by the classifier (60). It may then comprise information that causes the automated personal assistant (250) to retrieve information from a database and output this retrieved information in a form suitable for reception by the user (249).

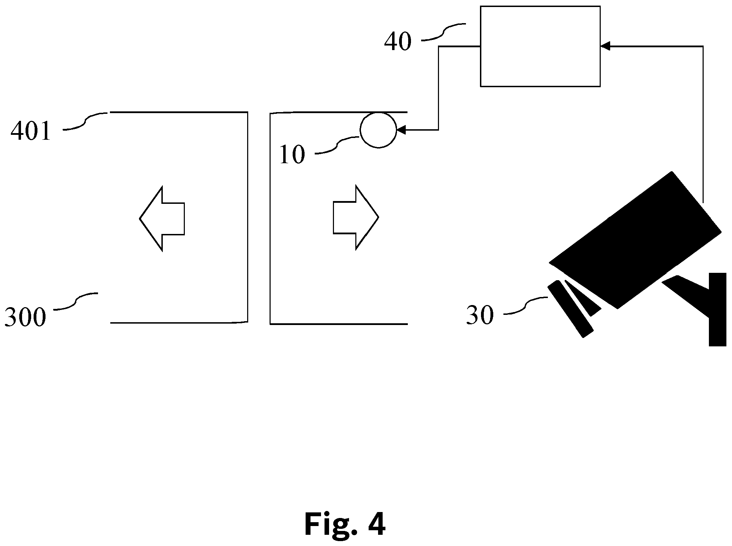

Shown in figure 4 is a non claimed implementation in which the control system (40) controls an access control system (300). The access control system (300) may be designed to physically control access. It may, for example, comprise a door (401). The sensor (30) can be configured to detect a scene that is relevant for deciding whether access is to be granted or not. It may for example be an optical sensor for providing image or video data, e.g., for detecting a person's face. The classifier (60) may be configured to interpret this image or video data, e.g., by matching identities with known people stored in a database, thereby determining an identity of the person. The actuator control signal (A) may then be determined depending on the interpretation of the classifier (60), e.g., in accordance with the determined identity. The actuator (10) may be a lock, which is opened or closed depending on the actuator control signal (A).

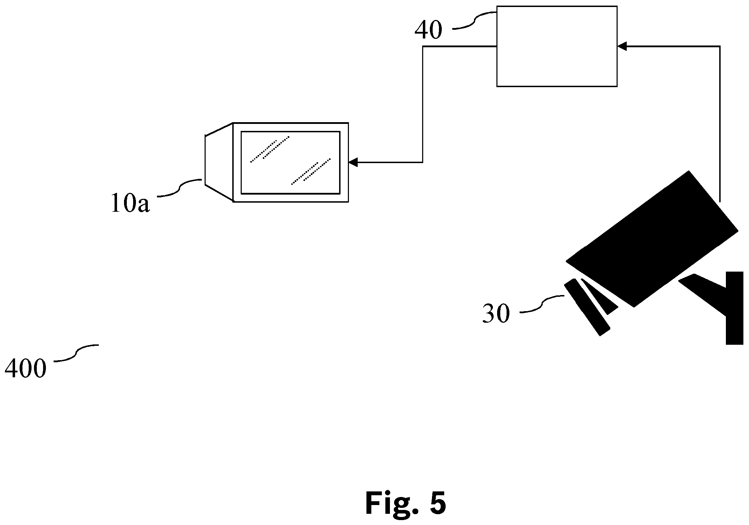

Shown in figure 5 is a non claimed implementation in which the control system (40) controls a surveillance system (400). This non claimed implementation is largely identical to the one shown in figure 4. Therefore, only the differing aspects will be described in detail. In this embodiment, the sensor (30) is configured to detect a scene that is under surveillance. The control system (40) does not necessarily control an actuator (10), but may alternatively control a display (10a). For example, the classifier (60) may determine a classification of a scene, e.g., whether the scene detected by an optical sensor (30) is suspicious. The actuator control signal (A), which is transmitted to the display (10a), may then, e.g., be configured to cause the display (10a) to adjust the displayed content dependent on the determined classification, e.g., to highlight an object that is deemed suspicious by the classifier (60).

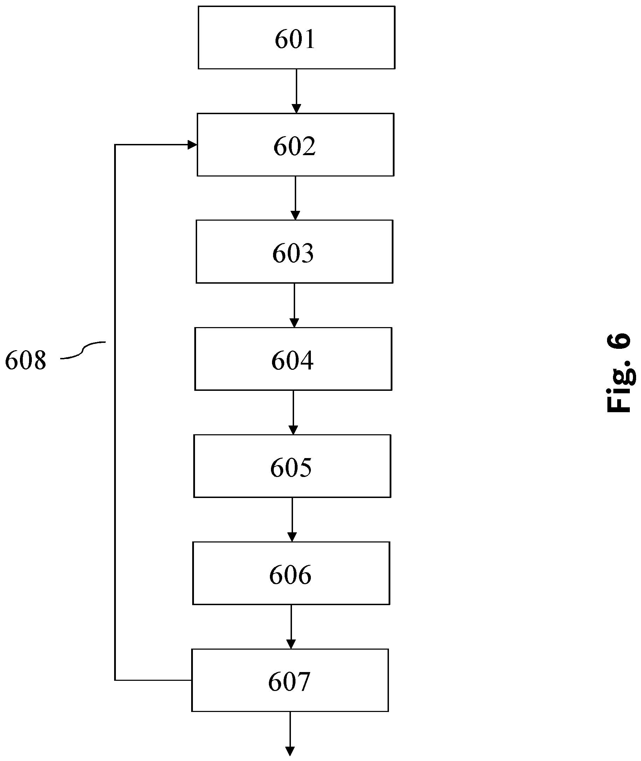

Shown in figure 6 is a flow-chart diagram that outlines an embodiment of a method for training a classifier (60) of the control system (40) such that it is robust against adversarial attacks. The method for training is supplied with the classifier (60), preferably a neural network, which is pretrained on a pretraining dataset, as well as a training dataset of input signals and corresponding desired output signals.

In a first step (601) a plurality of perturbations is initialized. For initialization, the input signals from the training dataset can each be scaled with a random number to form perturbations. Each perturbation is then be applied to each input signal of the training dataset in order to obtain a plurality of new input signals. For each perturbation, a first value is then obtained by computing the fraction of new input signals corresponding to an adapted input signal for which the classifier provides an incorrect classification with respect to all new input signals corresponding to the adapted input signal.

Alternatively, the input signals may be downsampled and/or cropped in order to obtain perturbations. These perturbations can be applied to parts of the input signals of the training dataset in order to obtain the plurality of new input signals. For example, when using images as input signals, the perturbations may be applied as patches to the input signals of the training dataset.

Alternatively, the perturbations may be initialized as noise which is applied to the input signal, either to the entire input signal or parts thereof, wherein each of the perturbations is then further adapted to an individual input signal from the training dataset to fool the classifier. This can be achieved using, e.g., the I-FGSM or the PGD attack algorithms for creating adversarial examples.

In a second step (602) a subset of the training dataset is then selected to serve as training batch. For this, a desired amount of input signals and corresponding desired output signals is chosen at random form the training dataset.

In a third step (603) a perturbation from the plurality of perturbations is drawn randomly with replacement for each pair of input signal and corresponding desired output signal from the training batch.

In a fourth step (604) each of the drawn perturbations is adapted to its corresponding input signal and desired output signal such that when the perturbation is applied to the respective input signal an adversarial example for the classifier (60) is created. This can be achieved by, e.g., running the I-FGSM or PGD attack algorithms. For each perturbation, this step returns a second perturbation which has been adapted to the respective input signal.

In a fifth step (605) each second perturbation is applied to its respective input signal in order to obtain a plurality of adversarial examples for the classifier (60).

In a sixth step (606), the classifier may be trained such that it predicts the desired output signal for an adversarial example obtained in the previous step. For this, a classifier can be trained using (stochastic) gradient descent or an adapted form thereof, e.g., Adam. When training a classifier (60) this way, the classifier predicts an output signal based on the adversarial example. The predicted output signal is then compared to the desired output signal using a loss function. The classifier is then adapted such that a loss value obtained from the loss function becomes smaller when again processing the adversarial example by the classifier (60) and comparing the then predicted output signal to the desired output signal. For example, when using, e.g., a neural network as classifier (60), a plurality of parameters of the neural network are adapted according to the negative gradient of the parameters with respect to the loss value.

In a seventh step (607) each randomly drawn perturbation is replaced in the plurality of perturbations by a linear combination of the perturbation itself and its corresponding second perturbation. The replacement may, e.g., be obtained according to the formula:

$$ l = (1 - \sigma) \cdot a_1 + \sigma \cdot a_2, $$

wherein $l$ is the linear combination, $a_1$ is the perturbation, $a_2$ is the second perturbation and $\sigma$ is a predefined value. This formulation can be understood as training the perturbations through meta-learning, wherein $\sigma$ is akin to a learning rate in gradient-based learning algorithms.

In an eight step (608) the steps two to seven are repeated. The steps may for example be repeated until the loss value falls below a predefined threshold.

Alternatively, training may be carried out for a predefined amount of iterations.

Having completed the desired number of iterations, the classifier (60) may then be used in the control system (40).

A number of perturbations may be obtained for testing the robustness of a classifier (60). This method is in large parts identical to the training process depicted in figure 6 so only the differences will be pointed out here.

Instead of training the set ($\xi$) of perturbations and the classifier (60), testing the classifier (60) does not require adapting the parameters ($\Phi$) of the classifier.

Instead, the set ($\xi$) of perturbations is adapted to a test dataset of the same datatype as the training dataset used for training the classifier (60) as is done during training of the classifier. After adapting the perturbations for a predefined number of steps, the robustness of the classifier (60) is determined by applying each perturbation to the input signals from the test dataset and providing the perturbed input signals obtained this way to the classifier (60).

For each perturbation, the number of perturbed input signals misclassified by the classifier (60) can then be determined. A robustness value of the classifier (60) can then be defined as the largest fraction of perturbed input signals for a single perturbation with respect to all input signals in the test dataset.

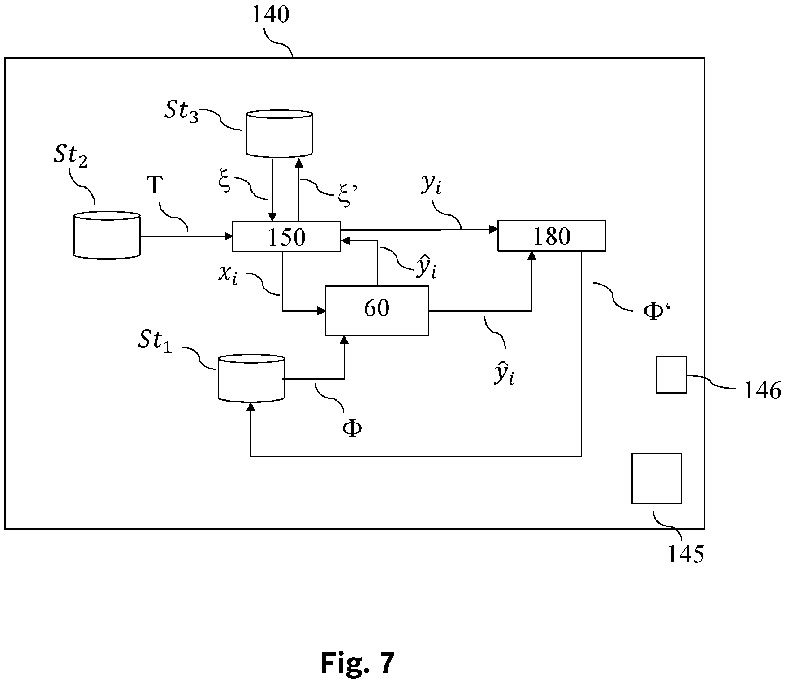

Shown in figure 7 is a training system (140) for carrying out the method displayed in figure 6. A training data unit (150) is configured to determine adapted input signals ($x_i$), which are passed on to the classifier (60).

For this, the training data unit (150) accesses a computer-implemented training database ($St_2$) in which at least one set (T) of training data is stored. The set (T) comprises pairs of input signals and corresponding desired output signals ($y_i$).

The set (T) of training data may be a full set of training data. It may also be a selected batch of training data if training is performed in batches. Additionally, the training data unit (150) receives a set ($\xi$) of perturbations from a computer-implemented perturbation database ($St_3$). The training data unit (150) then determines an adapted input signal ($x_i$) by selecting a pair of input signal and desired output signal ($y_i$), selecting a perturbation from the set ($\xi$) of perturbations and applying the selected perturbation to the input signal.

The obtained adapted input signal ($x_i$) is then provided to the classifier (60) which determines an output signal ($\hat{y}$) from the adapted input signal ($x_i$). The output signal ($\hat{y}$) is then passed back to the training unit (150), where the selected perturbation is adapted using projected gradient descent such that it becomes stronger. The procedure of applying the stronger perturbation to the input signal to obtain an adapted input signal ($x_i$), determining an output signal ($y_i$) for the adapted input signal ($x_i$) and adapting the perturbation to become stronger is then repeated for a desired amount of iterations.

After the desired amount of iterations, the output signal ($\hat{y}$) and desired output signal are passed to an update unit (180). Additionally, the training unit (150) stores an updated set ($\xi$) of perturbations in the perturbation database by replacing the selected perturbation with the adapted perturbation.

Based on the output signal ($\hat{y}$) and the desired output signal ($y_i$), the update unit then determines an updated set ($\Phi'$) of parameters for the classifier (60) using, e.g., stochastic gradient descent. The updated set ($\Phi'$) of parameters is then stored in the parameter storage ($St_1$).

The training process is then repeated for a desired amount of iterations, wherein the updated set ($\Phi'$) of parameters is provided as set ($\Phi$) of parameters by the parameter storage ($St_1$) in each iteration and the updated set ($\xi$) of perturbations is provided as set ($\xi$) of perturbations by the perturbation database ($St_3$).

Furthermore, the training system (140) may comprise a processor (145) (or a plurality of processors) and at least one machine-readable storage medium (146) on which instructions are stored, which, if carried out, cause the training system (140) to carry out the training method according an aspect of the invention.

The training unit (150) may further select randomly for each iteration whether a perturbation is to be applied to an input signal or not. If it decides that no perturbation is to be applied to the input signal, the classifier (60) is provided with the input signal as adapted input signal ($x_i$) and no perturbation updates are computed.

**Claims**

1. Computer-implemented method for training a classifier (60), wherein the classifier (60) is configured to classify input signals of digital image data and/or audio data and training the classifier (60) is based on a perturbed input signal obtained by applying a perturbation provided from a plurality ($\xi$) of perturbations to an input signal provided from a training dataset, wherein the method comprises the following steps:

   • Providing a plurality of initial perturbations;
   • Adapting a perturbation from the plurality of initial perturbations to an input signal, wherein the input signal is randomly drawn from the training dataset and the perturbation is adapted to the input signal such that applying the perturbation to the input signal yields a second input signal, which is classified differently than the first input signal;
   • Providing a subset of the plurality of initial perturbations as plurality ($\xi$) of perturbations;
   • Training the classifier (60) based on the plurality ($\xi$) of perturbations, wherein the step of training the classifier (60) comprises the further steps of:

a. Selecting (603) a first perturbation from the plurality of perturbations and selecting an input signal and a corresponding desired output signal from the training dataset;
b. Obtaining (604) a second perturbation, which is stronger than the first perturbation, by adapting the first perturbation based on the input signal, the corresponding desired output signal and the classifier (60);
c. Obtaining (605) a first adversarial example by applying the second perturbation to the input signal;
d. Adapting (606) the classifier (60) by training the classifier (60) based on the first adversarial example and the corresponding desired output signal to harden the classifier (60) against the second perturbation;
e. Replacing (607) the first perturbation in the plurality of perturbations by a linear combination of the first perturbation and the second perturbation;
f. Repeating (608) steps a. to e.

2. Method according to claim 1, wherein at least one perturbation from the plurality of initial perturbations is provided by randomly drawing a noise signal and providing the noise signal as perturbation.

3. Method according to claim 1, wherein at least one perturbation from the plurality of initial perturbations is provided by randomly sampling an input signal from the training dataset or a second dataset, adapting a plurality of values comprised in the input signal, and providing the adapted input signal as perturbation.

4. Method according to any of the claims 2 to 3, wherein in the step of adapting the perturbation the perturbation is applied to a region of the input signal for obtaining a perturbed input signal.

5. Computer-implemented method for providing an output signal (y) characterizing a classification of an input signal (x) comprising the steps of:

• Training a classifier (60) according to any of the previous claims;
• Providing the classifier (60) in a control system (40);
• Obtaining the output signal (y) from the control system (40), wherein the control system (40) supplies the input signal (x) to the classifier (60) to obtain the output signal (y); and
• Providing the output signal (40) for controlling the control system (40).

6. Method according to claim 5, wherein the input signal (x) is obtained based on a signal (S) of a sensor (30) and/or an actuator (10) is controlled based on the output signal (y) and/or a display device (10a) is controlled based on the output signal (y).

7. Computer-implemented method for determining a robustness value for a classifier (60), wherein the classifier (60) is configured to classify input signals of digital image data and/or audio data, the method comprising the steps of:

g. Providing a plurality of initial perturbations;
h. Selecting a first perturbation form the plurality of perturbations and selecting an input signal and a corresponding desired output signal from a test dataset;
i. Obtaining a second perturbation, which is stronger than the first perturbation, by adapting the first perturbation based on the input signal, the corresponding desired output signal and the classifier (60);
j. Replacing the first perturbation in the plurality of perturbations by a linear combination of the first perturbation and the second perturbation;
k. Repeating steps h. to j. for a predefined number of iterations;
l. Determining a strongest perturbation from the plurality of perturbations with respect to a test dataset after having completed the predefined number of iterations;
m. Determining a fraction of input signals in the test dataset for which the strongest perturbation is able to cause a misclassification by the classifier (60) and providing the determined fraction as the robustness value.

8. Computer program that is configured to cause a computer to carry out the method according to any one of the claims 1 to 7 with all of its steps if the computer program is carried out by a processor (45, 145).

9. Machine-readable storage medium (46, 146) on which the computer program according to claim 8 is stored.

10. A control system (40) configured to control an actuator (10) and/or a display device (10a) based on an output signal (y) of a classifier (60), wherein the classifier is trained with a method according to any one of the claims 1 to 4.

11. A training system (140) configured to carry out a method according to any one of the claims 1 to 4.

**Patentansprüche**

1. Computer-implementiertes Verfahren zum Trainieren eines Klassifikators (60), wobei der Klassifikator (60) zum Klassifizieren von Eingangssignalen von digitalen Bilddaten und/oder Audiodaten ausgelegt ist und das Trainieren des Klassifikators (60) auf einem gestörten Eingangssignal basiert, das durch Anwenden einer aus einer Mehrzahl ($\mathcal{E}$) von Störungen bereitgestellten Störung auf ein aus einem Trainingsdatensatz bereitgestellten Eingangssignal erhalten wird, wobei das Verfahren die folgenden Schritte umfasst:

   • Bereitstellen einer Mehrzahl anfänglicher Störungen;
   • Anpassen einer Störung aus der Mehrzahl anfänglicher Störungen an ein Eingangssignal, wobei das Eingangssignal zufällig aus dem Trainingsdatensatz bezogen wird und die Störung derart an das Eingangssignal angepasst wird, dass das Anwenden der Störung auf das Eingangssignal ein zweites Eingangssignal ergibt, das anders als das erste Eingangssignal klassifiziert wird;
   • Bereitstellen einer Teilmenge der Mehrzahl anfänglicher Störungen als Mehrzahl ($\mathcal{E}$) von Störungen;
   • Trainieren des Klassifikators (60) basierend auf der Mehrzahl ($\mathcal{E}$) von Störungen, wobei der Schritt des Trainierens des Klassifikators (60) die folgenden weiteren Schritte umfasst:

      a. Auswählen (603) einer ersten Störung aus der Mehrzahl von Störungen und Auswählen eines Eingangssignals und eines entsprechenden gewünschten Ausgangssignals aus dem Trainingsdatensatz;
      b. Erhalten (604) einer zweiten Störung, die stärker als die erste Störung ist, durch Anpassen der ersten Störung basierend auf dem Eingangssignal, dem entsprechenden gewünschten Ausgangssignal und dem Klassifikator (60);
      c. Erhalten (605) eines ersten Adversarial-Beispiels durch Anwenden der zweiten Störung auf das Eingangssignal;
      d. Anpassen (606) des Klassifikators (60) durch Trainieren des Klassifikators (60) basierend auf dem ersten Adversarial-Beispiel und dem entsprechenden gewünschten Ausgangssignal, um den Klassifikator (60) gegen die zweite Störung abzuhärten;
      e. Ersetzen (607) der ersten Störung in der Mehrzahl von Störungen durch eine lineare Kombination der ersten Störung und der zweiten Störung;

   f. Wiederholen (608) der Schritte a. bis e.

2. Verfahren nach Anspruch 1, wobei mindestens eine Störung aus der Mehrzahl anfänglicher Störungen durch zufälliges Beziehen eines Rauschsignals und Bereitstellen des Rauschsignals als Störung bereitgestellt wird.

3. Verfahren nach Anspruch 1, wobei mindestens eine Störung aus der Mehrzahl anfänglicher Störungen durch zufälliges Abtasten eines Eingangssignals aus dem Trainingsdatensatz oder einem zweiten Datensatz, Anpassen einer Mehrzahl von in dem Eingangssignal enthaltenen Werten und Bereitstellen des angepassten Eingangssignals als Störung bereitgestellt wird.

4. Verfahren nach einem der Ansprüche 2 bis 3, wobei die Störung in dem Schritt des Anpassens der Störung auf einen Bereich des Eingangssignals zum Erhalten eines gestörten Eingangssignals angewendet wird.

5. Computer-implementiertes Verfahren zum Bereitstellen eines Ausgangssignals (y), das eine Klassifikation eines Eingangssignals (x) charakterisiert, umfassend die folgenden Schritte:

   • Trainieren eines Klassifikators (60) nach einem der vorhergehenden Ansprüche;
   • Bereitstellen des Klassifikators (60) in einem Steuersystem (40);
   • Erhalten des Ausgangssignals (y) von dem Steuersystem (40), wobei das Steuersystem (40) das Eingangssignal (x) an den Klassifikator (60) liefert, um das Ausgangssignal (y) zu erhalten; und
   • Bereitstellen des Ausgangssignals (40) zum Steuern des Steuersystems (40).

6. Verfahren nach Anspruch 5, wobei das Eingangssignal (x) basierend auf einem Signal (S) eines Sensors (30) erhalten wird und/oder ein Aktuator (10) basierend auf dem Ausgangssignal (y) gesteuert wird und/oder eine Anzeigevorrichtung (10a) basierend auf dem Ausgangssignal (y) gesteuert wird.

7. Computer-implementiertes Verfahren zum Bestimmen eines Robustheitswerts für einen Klassifikator (60), wobei der Klassifikator (60) zum Klassifizieren von Eingangssignalen von digitalen Bilddaten und/oder Audiodaten ausgelegt ist, wobei das Verfahren die folgenden Schritte umfasst:

   g. Bereitstellen einer Mehrzahl anfänglicher Störungen;
   h. Auswählen einer ersten Störung aus der Mehrzahl von Störungen und Auswählen eines Eingangssignals und eines entsprechenden gewünschten Ausgangssignals aus einem Testdatensatz;

i. Erhalten einer zweiten Störung, die stärker als die erste Störung ist, durch Anpassen der ersten Störung basierend auf dem Eingangssignal, dem entsprechenden gewünschten Ausgangssignal und dem Klassifikator (60);

j. Ersetzen der ersten Störungen in der Mehrzahl von Störungen durch eine lineare Kombination der ersten Störung und der zweiten Störung;

k. Wiederholen der Schritte h. bis j. für eine vordefinierte Anzahl von Iterationen;

l. Bestimmen einer stärksten Störung aus der Mehrzahl von Störungen mit Bezug auf einen Testdatensatz nach Abschluss der vordefinierten Anzahl von Iterationen;

m. Bestimmen eines Bruchteils von Eingangssignalen in dem Testdatensatz, für den die stärkste Störung eine Fehlklassifikation durch den Klassifikator (60) verursachen kann, und Bereitstellen des bestimmten Bruchteils als den Robustheitswert.

8. Computerprogramm, das dazu ausgelegt ist, zu bewirken, dass ein Computer das Verfahren nach einem der Ansprüche 1 bis 7 mit all seinen Schritten ausführt, wenn das Computerprogramm durch einen Prozessor (45, 145) ausgeführt wird.

9. Maschinenlesbares Speichermedium (46, 146), auf dem das Computerprogramm nach Anspruch 8 gespeichert ist.

10. Steuersystem (40), ausgelegt zum Steuern eines Aktuators (10) und/oder einer Anzeigevorrichtung (10a) basierend auf einem Ausgangssignal (y) eines Klassifikators (60), wobei der Klassifikator mit einem Verfahren nach einem der Ansprüche 1 bis 4 trainiert ist.

11. Trainingssystem (140), ausgelegt zum Ausführen eines Verfahrens nach einem der Ansprüche 1 bis 4.

**Revendications**

1. Procédé mis en œuvre par ordinateur pour l'apprentissage d'un classificateur (60), le classificateur (60) étant configuré pour classifier des signaux d'entrée de données d'images et/ou de données audio numériques et l'apprentissage du classificateur (60) étant basé sur un signal d'entrée perturbé obtenu en appliquant une perturbation fournie parmi une pluralité ($\mathcal{E}$) de perturbations à un signal d'entrée fourni parmi un ensemble de données d'apprentissage, le procédé comprenant les étapes suivantes :

• fourniture d'une pluralité de perturbations initiales ;
• adaptation d'une perturbation parmi la pluralité de perturbations initiales à un signal d'entrée, le signal d'entrée étant aléatoirement tiré de l'ensemble de données d'apprentissage et la perturbation étant adaptée au signal d'entrée de telle sorte que l'application de la perturbation au signal d'entrée produit un deuxième signal d'entrée, lequel est classifié différemment du premier signal d'entrée ;
• fourniture d'un sous-ensemble de la pluralité de perturbations initiales en tant que pluralité ($\mathcal{E}$) de perturbations ;
• apprentissage du classificateur (60) sur la base de la pluralité ($\mathcal{E}$) de perturbations, l'étape d'apprentissage du classificateur (60) comprenant les autres étapes de :

a. sélection (603) d'une première perturbation parmi la pluralité de perturbations et sélection d'un signal d'entrée et d'un signal de sortie souhaité correspondant parmi l'ensemble de données d'apprentissage ;
b. obtention (604) d'une deuxième perturbation, laquelle est plus forte que la première perturbation, en adaptant la première perturbation sur la base du signal d'entrée, du signal de sortie souhaité correspondant et du classificateur (60) ;
c. obtention (605) d'un premier exemple conflictuel en appliquant la deuxième perturbation au signal d'entrée ;
d. adaptation (606) du classificateur (60) par apprentissage du classificateur (60) sur la base du premier exemple conflictuel et du signal de sortie souhaité correspondant pour renforcer le classificateur (60) contre la deuxième perturbation ;
e. remplacement (607) de la première perturbation dans la pluralité de perturbations par une combinaison linéaire de la première perturbation et de la deuxième perturbation ;
f. répétition (608) des étapes a. à e.

2. Procédé selon la revendication 1, au moins une perturbation parmi la pluralité de perturbations initiales étant fournie en tirant aléatoirement un signal de bruit et en fournissant le signal de bruit en tant que perturbation.

3. Procédé selon la revendication 1, au moins une perturbation parmi la pluralité de perturbations initiales étant fournie par échantillonnage aléatoire d'un signal d'entrée parmi l'ensemble de données d'apprentissage ou un deuxième ensemble de données, adaptation d'une pluralité de valeurs comprises dans le signal d'entrée, et fourniture du signal d'entrée adapté en tant que perturbation.

4. Procédé selon l'une quelconque des revendications 2 à 3, dans l'étape d'adaptation de la perturbation, la perturbation étant appliquée à une région du signal d'entrée pour l'obtention d'un signal d'entrée perturbé.

5. Procédé mis en œuvre par ordinateur pour fournir un signal de sortie (y) caractérisant une classification d'un signal d'entrée (x) comprenant les étapes de :

   • apprentissage d'un classificateur (60) selon l'une quelconque des revendications précédentes ;
   • fourniture du classificateur (60) dans un système de commande (40) ;
   • obtention du signal de sortie (y) en provenance du système de commande (40), le système de commande (40) fournissant le signal d'entrée (x) au classificateur (60) pour obtenir le signal de sortie (y) ; et
   • fourniture du signal de sortie (40) pour commander le système de commande (40).

6. Procédé selon la revendication 5, le signal d'entrée (x) étant obtenu sur la base d'un signal (S) d'un capteur (30) et/ou un actionneur (10) étant commandé sur la base du signal de sortie (y) et/ou un dispositif d'affichage (10a) étant commandé sur la base du signal de sortie (y).

7. Procédé mis en œuvre par ordinateur pour déterminer une valeur de robustesse pour un classificateur (60), le classificateur (60) étant configuré pour classifier des signaux d'entrée de données d'images et/ou de données audio numériques, le procédé comprenant les étapes de :

   g. fourniture d'une pluralité de perturbations initiales ;
   h. sélection d'une première perturbation parmi la pluralité de perturbations et sélection d'un signal d'entrée et d'un signal de sortie souhaité correspondant parmi un ensemble de données test ;
   i. obtention d'une deuxième perturbation, qui est plus forte que la première perturbation, en adaptant la première perturbation sur la base du signal d'entrée, du signal de sortie souhaité correspondant et du classificateur (60) ;
   j. remplacement de la première perturbation dans la pluralité de perturbations par une combinaison linéaire de la première perturbation et de la deuxième perturbation ;
   k. répétition des étapes h. à j. pour un nombre prédéfini d'itérations ;
   l. détermination d'une perturbation la plus forte parmi la pluralité de perturbations par rapport à un ensemble de données test après avoir achevé le nombre prédéfini d'itérations ;
   m. détermination d'une fraction de signaux d'entrée dans l'ensemble de données test pour lequel la perturbation la plus forte peut causer une mauvaise classification par le classificateur (60) et fourniture de la fraction déterminée en tant que valeur de robustesse.

8. Programme informatique configuré pour amener un ordinateur à réaliser le procédé selon l'une quelconque des revendications 1 à 7 avec toutes ses étapes si le programme informatique est réalisé par un processeur (45, 145) .

9. Support de stockage lisible par machine (46, 146) sur lequel est stocké le programme informatique selon la revendication 8.

10. Système de commande (40) configuré pour commander un actionneur (10) et/ou un dispositif d'affichage (10a) sur la base d'un signal de sortie (y) d'un classificateur (60), le classificateur étant entraîné avec un procédé selon l'une quelconque des revendications 1 à 4.

11. Système d'apprentissage (140) configuré pour réaliser un procédé selon l'une quelconque des revendications 1 à 4.

**Fig. 1**

**Fig. 2**

**Fig. 3**

**Fig. 4**

**Fig. 5**

**Fig. 6**

**Fig. 7**

## REFERENCES CITED IN THE DESCRIPTION

**Patent documents cited in the description**

- EP 3576021 A
- DE 102018200724 A1